# EUROPEAN PATENT SPECIFICATION

(11) **EP 2 043 953 B1**
(45) Date of publication and mention of the grant of the patent: **09.10.2013**
(21) Application number: 07793909.8
(22) Date of filing: 03.07.2007
(51) Int. Cl.: C01B 33/187

(54) **PRODUCTION OF SILICA FROM OLIVINE**
HERSTELLUNG VON SILICIUMDIOXID AUS OLIVIN
PRODUCTION DE SILICE À PARTIR D'OLIVINE

(30) Priority: 03.07.2006 NO 20063085
(43) Date of publication of application: 08.04.2009
(73) Proprietor: Norut Teknologi AS, 8504 Narvik (NO)
(72) Inventor: ANTONSEN, Roy, 8515 Narvik (NO)
(74) Representative: Furan, Tone
(86) International application number: PCT/NO2007/000254
(87) International publication number: WO 2008/004888

(56) References cited:
- WO-A1-95/07235
- WO-A1-03/072501
- WO-A1-2007/069902
- US-A- 4 058 587
- JUSTNES H. ET AL.: 'Pozzolanic, Amorphous Silica Produced from the Mineral Olivine' AMERICAN CONCRETE INSTITUTE, SEVENTH CANMETT/ACI. vol. 2, 2001, pages 769 - 781, XP003018640

## Description

This application relates to production of silicon dioxide, SiO₂, from olivine.

### Background

Silicon dioxide, also called silica, has 17 different crystalline forms and one amorphous form giving the material a range of physiochemical properties making it suitable for a wide range of applications. Silicon dioxide is presently being used in heat and thermal shock resistant ceramics, for making quartz glass, it may be polymerised to form chemically inert, heat resistant, water resistant, odourless, and colourless silicones, it may be used as filler in many products such as concrete, car tyres, tooth paste, painting etc., it may be used in abrasives, it is the main raw material for producing silicon metal, etc. In short, silicon dioxide is a versatile product that is being sold in large quantities in different grades of purity, particle sizes, and specific surface areas on the world market.

Silicon dioxide is abundantly available in the form of silicate minerals. A silicate mineral is a compound consisting of silicon and oxygen, SiₓO_{y}, one or more metal, and possibly hydrogen. An abundant mineral in this group is olivine. Olivine occurs in mafic and ultramafic igneous rocks and as a primary mineral in certain metamorphic rocks. Olivine is one of the most common minerals on Earth. Olivine is a series of isomorphic mixtures of fosterite, Mg₂SiO₄ and fayalite, Fe₂SiO₄ ranging from pure fosterite to pure fayalite. The general formula for olivine is (Mg, Fe)₂SiO₄. Silicate minerals are an attractive source for silicon dioxide due to their abundance and availability in the crust of the Earth.

### Prior art

US 5,780,005 describes a process for making spherical silicon dioxide particles for use as filler in concrete and car tyres by dissolving olivine in a mineral acid such as HNO₃, HCl, or H₂SO₄, followed by a filtration step to separate the silicon dioxide particles from the remaining solution.

However, the amounts of acid needed to extract the silicon dioxide from silicate minerals add an unacceptable cost. It is thus needed a more cost efficient process for extracting silicon dioxide from olivine.

### Objective of the invention

The main objective of the invention is to provide a cost efficient and environmental friendly manufacturing process for spherical amorphous silica with desirable particle size and surface characteristics from olivine.

### Description of the invention

The objective of the invention may be obtained by the features as set forth in the following description of the invention.

The present invention comprises a method for production of silicon dioxide particles, where
- 1) olivine is mechanically crushed to small pieces,
- 3) the small pieces of olivine is submerged in an acid for leaching the silicate mineral,
- 4) the solid fraction comprising SiO₂-particles is separated from the acid derivatives resulting in step 3),
- 5) the solid fraction from step 4) is processed to spherical SiO₂-particles,
- 6) the acid in the acid derivative fraction from step 4) is regenerated and reused in step 3), and
- 7) the metallic ions in the acid derivatives are converted to solid salts,
- the acid used for leaching the olivine in step 3) is formic acid or carbonic acid.

Further the method includes a purification step for removing/reducing the content of impurities in the crushed olivine is introduced as step 2) between step 1) and 3). The purification step 2) comprises removal of FeS-particles by use of magnetic separation. The separation of the solid SiO₂-particles and acid derivatives in step 4) is obtained by filtration, sedimentation, floating, or washing. The processing in step 5) comprises one or more of washing, purification, grinding, and sorting in fractions after particle size, surface area, and purity. The regeneration of the acid is obtained by heating the acid derivatives from step 4) until the acid evaporates from the liquid derivative phase, collecting the acid vapour and then condensing the acid to liquid form.

Embodiments of the invention will now be described with reference to the following drawing 1 which is a schematic figure of the method.

The invention utilises the realisation that silicate minerals is solvable in organic acids and that use of organic acids may give reversible reactions such that the organic acid may be regenerated and reused in the process. Thus the cost for extracting silicon dioxide by acid leaching of olivine may be substantially reduced, giving a significantly improved economy for this production route of silicon dioxide, SiO₂.

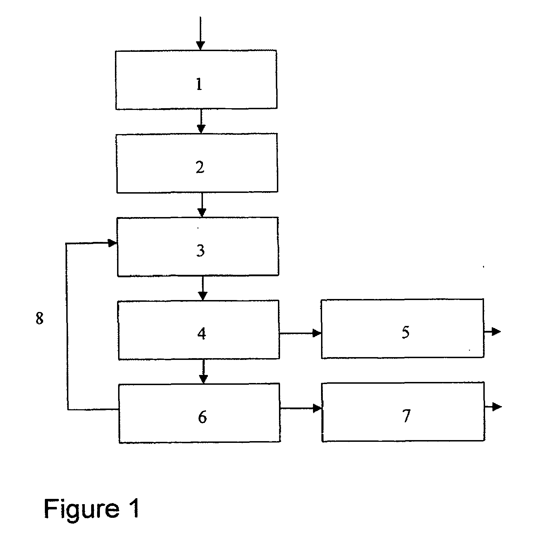

The inventive idea may be implemented in a method for production of silicon dioxide from olivine comprising the following process steps (the method is schematically illustrated in Figure 1):
1) mechanically crushing olivine,
2) optionally remove/reduce non-silicate mineral constituents,
3) submerge the olivine pieces in a formic acid or carbonic acid,
4) separate solid silicon dioxide from the acid derivatives formed in step 3),
5) clean and optionally post-process the solid silicon dioxide for sale.
6) regenerate the formic acid or the carbonic acid, separate it from the acid derivative fraction and reintroduce the acid to step 3), and
7) Prepare products for sale of the Fe and Mg ions in the residue of the acid derivative fraction.

The term "organic acid" as used in this application includes all acids containing a carbon atom. The acids used in present invention are formic acid (HCOOH) and carbonic acid (H₂CO₃). The leaching process should be carefully controlled with regard to temperature, acid concentration, leaching time and pressure (the latter concerns use of carbonic acid and not organic acids) in order to achieve the desired silica particle size specific surface and volume.

In cases of olivine containing impurities, it may be necessary to implement a pre-treatment step 2) in order to obtain a feed stock of sufficient purity. The pre-treatment may be washing of the crushed olivine, magnetic separation of iron sulphide, removal of undesirable components such as spinel, serpentine, pyroxene, etc.

The separation of solid silicon dioxide particles from the acid derivatives in step 4) may be obtained by any conventional process for separating a solid out of a liquid fraction, such as for example filtration, sedimentation, washing, floating etc.

The cleaning and post-processing of the silicon dioxide particles in step 5) may be washing, purification processes, grinding, sorting in fractions after particle size, surface area, and purity, etc.

The regeneration of the acid anions in the liquid fraction from step 4) may for instance be by heating the liquid fraction until the acid anions are oxidised to the acid form and evaporates. Then the acid may be collected by condensing the vapour.

The preparation of products from the Fe and Mg ions in the acid derivative fraction may be a precipitation process by adding a compound that forms non-soluble Fe or Mg salts, or by simply heating the acid derivative fraction until the Fe or Mg content is precipitated as Fe(OH)₂ or Mg(OH)₂, or as FeO or MgO, respectively.

The inventive method provides an environmentally friendly, especially considering the carbonic acid process which consumes carbon dioxide, process leading to an amorphous silica product with high purity, low particle size and high surface area, and where the organic acids may be easily removed and recycled. The same is valid concerning carbonic acid which has a further advantage that carbonic acid is very cheap compared with mineral acids.

The present invention provides a total impurity level below 1%.

### Detailed description of the invention

The invention will be described in further detail by way of examples of preferred embodiments of the invention.

### Example 1 leaching of olivine by use of formic acid

The process illustrated in Figure 1 may be described as follows:
Olivine 9 is first subject to mechanical crushing 1 in order to make small lumps of the mineral which may be readily leached in acid. Eventual iron sulphides or other impurities are optionally separated out in step 2. The remaining crushed mineral is then transported to a reactor vessel and submerged in formic acid for leaching. This is illustrated schematically as step 3 on the figure. The fosterite and fayalite of olivine will react with the acid as follows:

   I Mg₂SiO₄(s) + 4 HCOOH (1) = 2 Mg(HCOO)₂ (aq) + 2 H₂O + SiO₂ (s)

   II Fe₂SiO₄(s) + 4 HCOOH (1) = 2 Fe(HCOO)₂ (aq) + 2 H₂O + SiO₂ (s)

After leaching, the content of reactor 3 is transported to a separation step 4 where the silicon dioxide is separated from the acid derivatives and then transported to a post-processing step 5 where the silicon dioxide particles are washed, grinded and dried to form spherical high purity silicon dioxide particles 10 for sale. The acid derivatives are transported to a regeneration step 6 where the derivatives are heated to temperatures in the range of 200-400 °C in order to obtain the following reactions:

III 2 Mg(HCOO)₂ (aq) + 2 H₂O = Mg(OH)₂ (s) + 2 HCOOH (g)

IV 2 Fe(HCOO)₂ (aq) + 2 H₂O = Fe(OH)₂ (s) + 2 HCOOH (g)

The gaseous formic acid formed in reaction III and IV is collected, condensed and reintroduced in reactor 3. Reference numeral 12 denotes Fe(OH)₂ (s) and Mg(OH)₂ (s), which both are prepared for sale or disposal in step 6.

Temperature, acid concentration, reaction time and convection are important parameters affecting size and surface area of the produced silica particles. Generally a BET-surface between 7 and 159 m²/g have been achieved by variations in reaction time at different reaction temperatures ranging from 10 to 80°C. The obtained results show clearly that an industrial process may be optimized in order to produce silica particles with desired size and surface area. Further the impurity level in the produced silica is strongly depended upon the pre-treatment process (removal of Fe-compounds) and the washing process of the manufactured silica. Simple experiments performed by filter washing of the precipitated silica showed that the oxide impurities may be reduced by using diluted organic acids instead of distilled water in the washing process. The duration of the washing process also showed to have important influence upon the impurity level. Table 1 shows achieved impurity level of manufactured silica by washing the silica for only 15 minutes during filtration with diluted formic acid. The total impurity level achieved was 4.17% whereas a total impurity level of 5.91% was achieved from the same batch but by washing for only 5 minutes with diluted formic acid.

### Comparative Example 2 leaching of olivine by use of acetic acid

This example is similar to example 1 except that acetic acid is used for leaching the olivine. In this case the reactions are:

V Mg₂SiO₄(s) + 4 CH₃COOH (1) = 2 Mg(CH₃COO)₂ (aq) + 2 H₂O + SiO₂ (s)

VI Fe₂SiO₄(s) + 4 CH₃COOH (1) = 2 Fe(CH₃COO)₂ (aq) + 2 H₂O + SiO₂ (s)

VII 2 Mg(CH₃COO)₂ (aq) + 2 H₂O = Mg(OH)₂ (s) + 2 CH₃COOH (g)

VIII 2 Fe(CH₃COO)₂ (aq) + 2 H₂O = Fe(OH)₂ (s) + 2 CH₃COOH (g)

The temperature needed to give reactions VII and VIII is from 200 to about 500 °C.

Rather similar results were obtained using acetic acid as by using formic acid. However, acetic acid has a slower reaction rate with olivine, compared to formic acid, and was therefore not examined in detail.

### Example 3 leaching of olivine by use of carbonic acid

This example is similar to example 1 except that carbonic acid is used for leaching the olivine. In this case the reactions are:

IX Mg₂SiO₄(s) + 2 H₂CO₃ (aq) = 2 MgCO₃ (s) + 2 H₂O + SiO₂ (s)

X Fe₂SiO₄(s) + 2 H₂CO₃ (aq) = 2 FeCO₃ (s) + 2 H₂O + SiO₂ (s)

XI MgCO₃ (s) = MgO (s) + CO₂ (g)

XII FeCO₃ (s) = FeO (s) + CO₂ (g)

The temperature needed to obtain reaction IX to XII is from about 200 to about 400 °C, and gives similar results as by using formic acid, described in example 1. A higher reaction temperature than 100°C seem to enhance reaction rate of IX and X considerably as water vapour is formed leading to a higher production rate of precipitated silica. Also it seem that introduction of smaller amounts of organic acid into the batch reactor also is beneficial upon production rate of silica. BET-surface area and the impurity level is similar as given for formic acid in example 1, and it is emphasised that optimization of the production process, with respect to the properties of precipitated silica, can be further achieved by adjusting the process parameters: temperature, vapour and CO₂ pressure, production time and convection. Having described preferred embodiments of the invention it will be apparent to those skilled in the art that other embodiments incorporating the concepts may be used. These and other examples of the invention illustrated above are intended by way of example only and the actual scope of the invention is to be determined from the following claims.

**Table 1. XRF-analysis of precipitated silica**

| COMPOUND | IMPURITY LEVEL [%] | IMPURITY LEVEL [%] |
|---|---|---|
| | 5 minutes of washing with diluted formic acid | 15 minutes of washing with diluted formic acid |
| Al₂O₃ | 0.93 | 0.77 |
| Fe₂O₃ | 1.70 | 0.95 |
| TiO₂ | 0.07 | 0.07 |
| MgO | 2.52 | 1.72 |
| CaO | 0.43 | 0.36 |
| Na₂O | 0.19 | 0.25 |
| K₂O | 0.03 | 0.046 |
| MnO | 0.02 | <0.01 |
| P₂O₅ | 0.02 | <0.01 |
| TOTAL | 5.91 | 4.17 |

## Claims

1. Method for production of silicon dioxide particles,
**characterised in that**
- 1) olivine is mechanically crushed to small pieces,
- 3) the small pieces of olivine is submerged in an acid for leaching the olivine,
- 4) the solid fraction comprising SiO₂-particles is separated from the acid derivatives resulting in step 3),
- 5) the solid fraction from step 4) is processed to spherical SiO₂-particles,
- 6) the acid in the acid derivative fraction from step 4) is regenerated and reused in step 3), and
- 7) the metallic ions in the acid derivatives are converted to solid salts,
- the acid used for leaching the olivine in step 3) is a formic acid or carbonic acid.

2. Method according to claim 1,
**characterised in that** a purification step for removing/reducing the content of impurities in the crushed olivine is introduced as step 2) between step 1) and 3).

3. Method according to any of the claims 1-2,
**characterised in that** the purification step 2) comprises removal of FeS-particles by use of magnetic separation.

4. Method according to any of the claims 1-4,
**characterised in that** the separation of the solid SiO₂-particles and acid derivatives in step 4) is obtained by filtration, sedimentation, floating, or washing.

5. Method according to any of the claims 1-4,
**characterised in that** the processing in step 5) comprises one or more of washing, purification, grinding, and sorting in fractions after particle size, surface area, and purity.

6. Method according to any of the claims 1-5,
**characterised in that** the regeneration of the acid is obtained by heating the acid derivatives from step 4) until the acid evaporates from the liquid derivative phase, collecting the acid vapour and then condensing the acid to liquid form.

## Patentansprüche

1. Verfahren zur Herstellung von Siliziumdioxidpartikeln,
**dadurch gekennzeichnet, dass**
- 1) Olivin mechanisch in kleine Stücke zerkleinert wird,
- 3) die kleinen Stücke von Olivin in eine Säure zum Auslaugen des Olivins eingetaucht werden,
- 4) der Feststoffanteil umfassend die SiO₂-Partikel von den in Schritt 3) resultierenden Säurederivaten getrennt wird,
- 5) der Feststoffanteil von Schritt 4) in kugelförmige SiO₂-Partikel verarbeitet wird,
- 6) Die Säure im Säurederivatanteil von Schritt 4) regeneriert und in Schritt 4) wiederverwendet wird, und
- 7) die Metallione in den Säurederivaten in feste Salze umgesetzt werden,
- die zum Auslaugen des Olivins in Schritt 3) verwendete Säure Ameisensäure oder Kohlensäure ist.

2. Verfahren nach Anspruch 1,
**dadurch gekennzeichnet, dass** ein Reinigungsschritt zum Entfernen/Reduzieren des Inhalts an Fremdstoffen im zerkleinerten Olivin als Schritt 2) zwischen Schritt 1) und 3) eingesetzt wird.

3. Verfahren nach einem der Ansprüche 1 - 2,
**dadurch gekennzeichnet, dass** der Reinigungsschritt 2) das Entfernen von FeS-Partikeln durch Verwendung eines magnetischen Trennverfahrens umfasst.

4. Verfahren nach einem der Ansprüche 1 - 4,
**dadurch gekennzeichnet, dass** die Trennung der festen SiO₂-Partikel und der Säurederivate in Schritt 4) durch Filtration, Sedimentation, Ausschwimmen oder Waschen erreicht wird.

5. Verfahren nach einem der Ansprüche 1 - 4,
**dadurch gekennzeichnet, dass** die Verarbeitung in Schritt 5) einen oder mehrere Wasch-, Reinigungs-, Schleif- und Sortiervorgänge in Fraktionen nach Partikelgröße, Oberflächenbereich und Reinheit umfasst.

6. Verfahren nach einem der Ansprüche 1 - 5,
**dadurch gekennzeichnet, dass** die Regeneration der Säure durch Erhitzen der Säurederivate aus Schritt 4) erhalten wird, bis die Säure aus der flüssigen Derivatphase evaporiert, der Säuredunst aufgefangen und die Säure dann in eine flüssige Form kondensiert wird.

## Revendications

1. Procédé de production de particules de dioxyde de silicium,
**caractérisé par le fait que**
- 1) de l'olivine est écrasée mécaniquement en petites morceaux,
- 3) les petites morceaux d'olivine sont immergés dans un acide pour lixivier l'olivine,
- 4) la fraction solide comprenant des particules de SiO₂ est séparée des dérivés d'acide résultant à l'étape 3),
- 5) la fraction solide de l'étape 4) est transformée en particules de SiO₂ sphériques,
- 6) l'acide dans la fraction de dérivé d'acide de l'étape 4) est régénéré et réutilisé dans l'étape 3),
- 7) les ions métalliques dans les dérivés d'acide sont convertis en sels solides,
- l'acide utilisé pour lixivier l'olivine dans l'étape 3) est un acide formique ou un acide carbonique.

2. Procédé selon la revendication 1,
**caractérisé par le fait qu'**une étape de purification pour éliminer/réduire la teneur en impuretés dans l'olivine écrasée est introduite en tant qu'étape 2) entre les étapes 1) et 3).

3. Procédé selon l'une quelconque des revendications 1 et 2,
**caractérisé par le fait que** l'étape de purification 2) comprend l'élimination de particules de FeS par utilisation d'une séparation magnétique.

4. Procédé selon l'une quelconque des revendications 1 à 3,
**caractérisé par le fait que** la séparation des particules de SiO₂ solides et des dérivés d'acide dans l'étape 4) est obtenue par filtration, sédimentation, flottation ou lavage.

5. Procédé selon l'une quelconque des revendications 1 à 4,
**caractérisé par le fait que** la transformation dans l'étape 5) comprend un ou plusieurs parmi le lavage, la purification, le broyage et le tri en fractions par les dimension, surface et pureté des particules.

6. Procédé selon l'une quelconque des revendications 1 à 5,
**caractérisé par le fait que** la régénération de l'acide est obtenue par chauffage des dérivés d'acide de l'étape 4) jusqu'à ce que l'acide s'évapore de la phase de dérivé liquide, collecte de la vapeur d'acide, puis condensation de l'acide sous forme liquide.
